# FASCICULE DE BREVET EUROPEEN

(11) **EP 3 299 656 B1**
(45) Date de publication et mention de la délivrance du brevet: **18.11.2020**
(21) Numéro de dépôt: 17192610.8
(22) Date de dépôt: 22.09.2017
(51) Int. Cl.: F16D 55/38, F03C 1/40, F04C 15/00, F16D 55/40

(54) **SYSTÈME DE FREINAGE AMÉLIORÉ POUR MACHINE HYDRAULIQUE**
VERBESSERTES BREMSSYSTEM FÜR HYDRAULISCHE MASCHINE
IMPROVED BRAKING SYSTEM FOR HYDRAULIC MACHINE

(30) Priorité: 23.09.2016 FR 1658965
(43) Date de publication de la demande: 28.03.2018
(73) Titulaire: Poclain Hydraulics Industrie, 60410 Verberie (FR)
(72) Inventeur: ENGRAND, Julien, 60410 VERBERIE (FR); VIDAL, Stéphane, 60410 VERBERIE (FR); GRILLON, Gilles, 60410 VERBERIE (FR); BONNOMET, Bertrand, 60410 VERBERIE (FR)
(74) Mandataire: Cabinet Beau de Loménie

(56) Documents cités:
- EP-A2- 1 070 847
- FR-A1- 2 579 281
- GB-A- 2 117 465
- GB-A- 2 253 658
- US-A1- 2011 253 488

## Description

### DOMAINE DE L'INVENTION

La présente invention concerne le domaine des machines hydrauliques, et vise plus précisément un système de freinage pour machine hydraulique, par exemple pour une machine hydraulique à pistons radiaux et came multilobes.

### ETAT DE LA TECHNIQUE ANTERIEURE

Les machines hydrauliques comprennent communément un système de freinage présentant une pluralité de disques empilés, dont une partie est liée en rotation au rotor, et une partie est liée en rotation au stator. Ces disques de freinage sont configurés de manière à réaliser une immobilisation du rotor par rapport au stator du fait des frottements résultant du contact entre les disques. Le document EP 1070847 présente un exemple de système de freinage selon le préambule de la revendication 1.

Les machines hydrauliques comprennent typiquement un frein statique, comprenant une rondelle ressort adaptée pour appliquer un effort de serrage sur les disques de freinage provoquant une immobilisation du rotor par rapport au stator, et un piston de défreinage configuré pour appliquer un effort de défreinage sur la rondelle ressort, tendant ainsi à desserrer les disques de freinage et ainsi permettre une rotation relative du rotor par rapport au stator.

Les contraintes en termes de couple de freinage vont cependant en augmentant, ce qui implique que les rondelles de freinage utilisées sont de plus en plus résistantes, et nécessitent donc l'application d'une pression importante pour désengager le frein statique, tout en conservant des contraintes strictes en termes d'encombrement.

Cette augmentation des contraintes a conduit à nécessiter l'emploi de pressions élevées, typiquement comprises entre 100 et 130 bar pour réaliser la commande de défreinage de certaines machines hydrauliques. Or, l'utilisation de telles pressions n'est pas acceptée dans certaines applications, du fait notamment des contraintes et des risques associés.

### PRESENTATION DE L'INVENTION

Le présent exposé concerne une machine hydraulique comprenant un arbre et un carter montés tournant l'un par rapport à l'autre au moyen d'un palier, la machine hydraulique comprenant
- des premiers éléments de freinage, solidaires en rotation du carter,
- des seconds éléments de freinage, solidaires en rotation de l'arbre, les premiers et seconds éléments de freinage formant un empilement et étant configurés de manière à réaliser une solidarisation en rotation du carter par rapport à l'arbre lors de leur mise en contact,
- une rondelle ressort montée en appui sur le carter, et tendant à solliciter les premiers et seconds éléments de freinage selon un sens de freinage tendant à provoquer une mise au contact des premiers et seconds éléments de freinage,
- un piston de défreinage, configuré pour solliciter la rondelle ressort selon un sens antagoniste au sens de freinage,
caractérisée en ce que le piston de défreinage comprend un piston de défreinage primaire associé à une chambre de défreinage primaire et un piston de défreinage secondaire associé à une chambre de défreinage secondaire, lesdites chambres primaire et secondaire étant reliées hydrauliquement et adaptées pour exercer un effort de poussée sur le piston primaire et sur le piston secondaire respectivement,
lesdites chambres primaire et secondaire étant disposées successivement selon une direction longitudinale de l'arbre et s'étendant radialement autour de l'arbre, de sorte que les projections de la chambre de défreinage primaire (62a) et de la chambre de défreinage secondaire (62b) selon un plan perpendiculaire à un axe longitudinal (X-X) défini par l'axe de rotation de la machine hydraulique (1) se superposent au moins partiellement.

En variante, la machine hydraulique comprend en outre un séparateur de chambre, configuré pour séparer les pistons primaire et secondaire de sorte que la pression au sein de chacune des chambres primaire et secondaire ne s'exerce que sur une unique face d'un unique piston, c'est à dire que la chambre secondaire d'exerce pas de pression sur la face du piston primaire opposée à la chambre primaire.

Le séparateur de chambre comprend alors typiquement un perçage pour permettre la communication de la pression de défreinage entre les chambres de défreinage primaire et secondaire.

Selon un exemple, la chambre de défreinage primaire est délimitée par le carter et par le piston de défreinage primaire, la chambre de défreinage secondaire est délimitée par le séparateur de chambre et par le piston de défreinage secondaire.

Selon un exemple, en projection selon un plan perpendiculaire à un axe longitudinal défini par l'axe de rotation de la machine hydraulique, les projections de la chambre de défreinage primaire et de la chambre de défreinage secondaire se superposent au moins partiellement, de sorte que la projection de la chambre de défreinage secondaire recouvre au moins 30 % de la projection de la chambre de défreinage primaire.

Selon un exemple, la machine hydraulique comprend en outre un piston de freinage interposé entre l'empilement et le piston de défreinage, et étant associé à une chambre de freinage configurée pour appliquer un effort sur le piston de freinage tendant à le solliciter selon un sens de freinage tendant à provoquer une mise au contact des premiers et seconds éléments de freinage.

Selon un exemple, la chambre de défreinage est reliée à une source d'alimentation en pression configurée pour délivrer une pression inférieure ou égale à 30 bar.

Selon un exemple, le piston de défreinage primaire se déplace en translation dans une chambre intermédiaire reliée fluidiquement à un volume interne du carter.

La machine hydraulique est par exemple une machine hydraulique à pistons radiaux et came multilobes, comprenant un bloc cylindres définissant une pluralité de cylindres s'étendant radialement autour de l'axe longitudinal de l'arbre et dans lesquels sont disposés des pistons disposés en regard d'une came multilobes.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en coupe d'une machine hydraulique selon un aspect de l'invention,
- la figure 2 est une vue détaillée d'une région de la figure 1 détaillant le système de freinage,
- les figures 3 et 4 illustrent des vues en coupe de deux autres modes de réalisation d'une machine hydraulique selon un aspect de l'invention.

Sur l'ensemble des figures, les éléments en commun sont repérés par des références numériques identiques.

### DESCRIPTION DETAILLEE D'EXEMPLES DE REALISATION

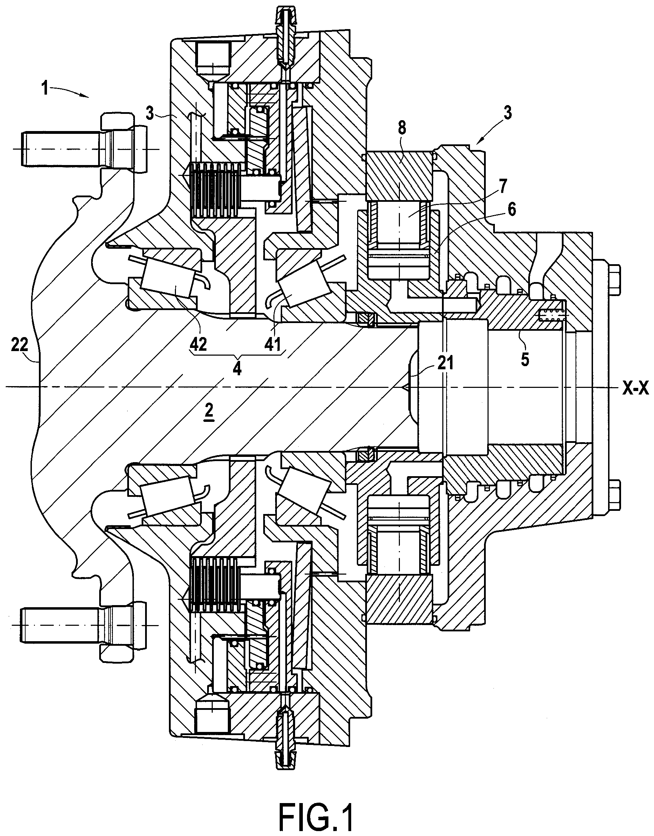

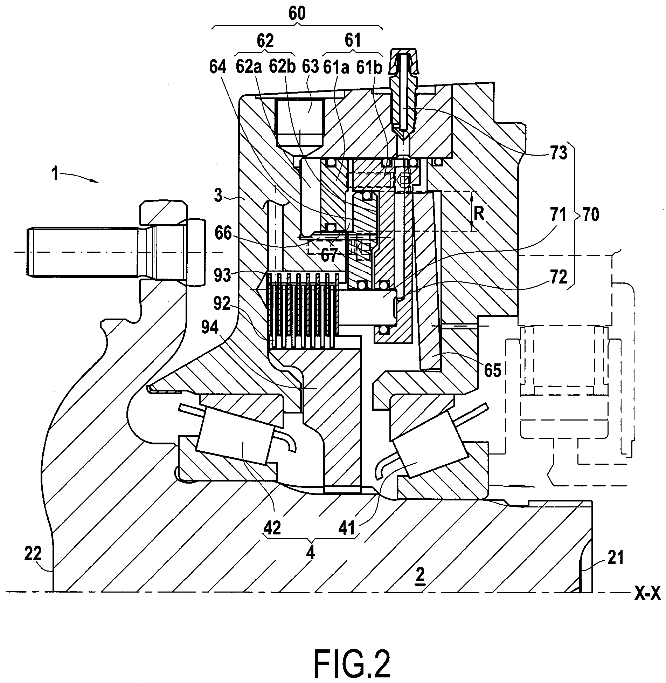

Les figures 1 et 2 représentent deux vues en coupe d'une machine hydraulique selon un aspect de l'invention, la figure 2 étant une vue détaillée du système de freinage représenté sur la figure 1.

Ces figures représentent une machine hydraulique 1 comprenant un arbre 2 et un carter 3 montés tournant l'un par rapport à l'autre au moyen d'un palier 4. L'arbre 2 définit un axe de rotation s'étendant selon une direction longitudinale X-X. On définit une extrémité proximale 21 et une extrémité distale 22 de l'arbre 2, l'extrémité proximale étant la plus proche du bloc cylindres 6 défini ci-après.

Cette machine hydraulique 1 est ici une machine hydraulique à pistons radiaux, comprenant un distributeur 5, un bloc cylindres 6 dans lequel sont disposés des pistons 7 disposés en regard d'une came multilobes 8. Cette came multilobes 8 est ici formée par une portion du carter 3. Le bloc cylindres 6 est monté fixe par rapport à l'arbre 2, de sorte que ces deux éléments 6 et 2 soient liés en rotation, par exemple au moyens de cannelures. Le distributeur 5 est positionné dans le prolongement de l'extrémité proximale 21 de l'arbre 2.

La machine hydraulique 1 peut être à arbre tournant et came fixe, ou inversement. La structure d'une telle machine hydraulique est bien connue, et ne sera pas décrite plus en détail par la suite.

Le palier 4 comprend deux éléments de roulement 41 et 42, ici deux roulements à rouleaux coniques espacés l'un par rapport à l'autre selon la direction longitudinale de l'arbre 2. L'élément de roulement 41 est ainsi qualifié d'élément de roulement proximal 41, tandis que l'élément de roulement 42 est qualifié d'élément de roulement distal 42.

La machine hydraulique comprend également un système de freinage 9 comprenant une pluralité de disques de freinage 93 solidaires du carter 3, et une pluralité de disques de freinage 92 solidaires de l'arbre 2, notamment par des cannelures ou rainures. Ces disques de freinage 93 et 92 forment ainsi une pile de disques de freinage. Dans l'exemple illustré, les disques de freinage 92 sont reliés à l'arbre par l'intermédiaire d'une pièce intermédiaire 94. Une telle pièce intermédiaire 94 est optionnelle et les disques de freinage 92 pouvant être reliés directement à l'arbre 2.

Le système de freinage comprend également deux commandes de freinage 60 et 70, configurés de manière à sélectivement appliquer un effort de compression sur les disques de freinage 92 et 93 afin de piloter un verrouillage du mouvement de rotation relatif de l'arbre 2 par rapport au carter 3.

La commande de freinage 60 définit un frein que l'on qualifie de statique. Elle comprend un piston de défreinage 61 sollicité par une rondelle ressort 65 de manière exercer un effort de serrage sur les disques de freinage 92 et 93, et ainsi les maintenir en position engagée. Le piston de défreinage 61 est associé à une chambre de défreinage 62 adaptée pour appliquer une pression générant un effort s'opposant à l'effort de poussée appliqué par la rondelle ressort 65, et tendant donc à déplacer le piston de défreinage 61 dans une direction l'éloignant des disques de freinage 92 et 93, et ainsi réaliser une action de désengagement des disques de freinage 92 et 93 et par conséquent libérer la rotation relative du carter 3 et de l'arbre 2. La chambre de défreinage 62 est alimentée via un conduit de mise en pression 63.

La rondelle ressort 65 applique ainsi un effort de serrage sur le piston de défreinage 61 qui transmet cet effort aux disques de freinage 92 et 93, les maintenant alors en position engagée, et verrouillant la rotation relative de l'arbre 2 et du carter 3. L'application d'une pression via le conduit de mise en pression 63 permet de réaliser une montée en pression dans la chambre de défreinage 62, ce qui entraine l'application d'un effort de défreinage s'opposant à l'effort de serrage exercé par la rondelle ressort 65 et permettant ainsi de desserrer les disques de freinage 92 et 93 et donc de permettre la rotation relative de l'arbre 2 et du carter 3.

La commande de freinage 60 définit ainsi typiquement un frein de parking, s'appliquant par défaut en l'absence de l'application d'une pression de défreinage.

Le piston de défreinage 61 est formé de deux pistons ; un piston de défreinage primaire 61a et un piston de défreinage secondaire 61b. Ces deux pistons de défreinage 61a et 61b peuvent être indépendants, et la chambre de défreinage 62 comprend ainsi également deux chambres : une chambre de défreinage primaire 62a et une chambre de défreinage secondaire 62b pilotant respectivement le déplacement du piston de défreinage primaire 61a et du piston de défreinage secondaire 61b.

Un séparateur de chambre 64 est interposé entre le piston de défreinage primaire 61a et le piston de défreinage secondaire 61b. Ce séparateur de chambre 64 permet de plus de définir la chambre de défreinage secondaire 62b de manière à ce que la pression en son sein ne s'applique pas sur le piston de défreinage primaire 61a. En effet, en l'absence d'un tel séparateur de chambre 64, la pression au sein de la chambre de défreinage secondaire 62b viendrait s'appliquer sur le piston de défreinage primaire 61a de manière à s'opposer à l'effort résultant de la pression au sein de la chambre de défreinage primaire 62a. Le séparateur de chambre 64 est ainsi un élément monté fixe sur le carter 3. Le séparateur de chambre 64 est lié mécaniquement au carter 3 de manière fixe et étanche par exemple au moyen de vis de fixation. Le séparateur de chambre 64 comprend également au moins un perçage 66 pour permettre la communication de la pression de défreinage entre les chambres de défreinage 62a et 62b, ce au moins un perçage 66 pouvant être débouchant en vis-à-vis d'un perçage réalisée dans le carter 3 et débouchant dans la chambre de défreinage primaire 62a. Afin que le perçage du carter 3 soit aligné en face du perçage 66 du séparateur de chambre 64, un système d'indexation est prévu entre le séparateur de chambre 64 et le carter 3.

Comme on le voit sur les figures, la chambre de défreinage primaire 62a et la chambre de défreinage secondaire 62b sont disposées successivement selon l'axe longitudinal X-X défini par l'arbre 2. Les pistons de défreinage primaire 61a et secondaire 61b sont également disposés successivement selon l'axe longitudinal X-X défini par l'arbre 2.

La chambre de défreinage primaire 62a et la chambre de défreinage secondaire 62b sont disposées de manière à s'étendre au moins partiellement sur une même région délimitée par un diamètre interne et un diamètre externe autour de l'axe longitudinal X-X défini par l'arbre 2. On repère cette région de chevauchement ou de superposition par la référence R sur la figure 2. Plus précisément, si l'on considère les projections de la chambre de défreinage primaire 62a et de la chambre de défreinage secondaire 62b selon un plan perpendiculaire à l'axe longitudinal X-X, ces deux chambres de défreinage 62a et 62b se superposent au moins partiellement.

L'encombrement radial de ces deux chambres de défreinage 62a et 62b est donc inférieur à la somme de leurs deux encombrements radiaux respectifs. La valeur de la superposition permet de définit le gain réalisé en termes d'effort de défreinage et d'encombrement. Selon un mode de réalisation, en considérant les projections de la chambre de défreinage primaire 62a et de la chambre de défreinage secondaire 62b selon un plan perpendiculaire à l'axe longitudinal X-X, la projection de la chambre de défreinage secondaire 62b recouvre au moins 30 % de la surface de la projection de la chambre de défreinage primaire 62a, plus précisément au moins 50 %, ou encore au moins 60 %, ou encore au moins 75 % de sa surface.

On note par ailleurs que dans l'exemple représenté, ce chevauchement des chambres de défreinage primaire et secondaire 62a et 62b entraine également un chevauchement des pistons de défreinage primaire et secondaire 61a et 61b.

Le séparateur de chambre 64 ainsi que le piston de défreinage primaire 61a et le piston de défreinage secondaire 61b sont chacun munis d'éléments d'étanchéité de manière à assurer notamment l'étanchéité des différentes chambres de défreinage 62a et 62b.

La zone entre le séparateur de chambre 64 et le piston de défreinage primaire 61a définit une chambre intermédiaire 67, cette chambre intermédiaire 67 définissant le déplacement maximal possible pour le piston de défreinage primaire 61a.

En fonctionnement, l'application d'une pression de défreinage via le conduit de mise en pression 63 va entrainer une montée en pression dans les chambres de défreinage primaire 62a et secondaire 62b, ce qui va entrainer un déplacement des pistons de défreinage primaire 61a et secondaire 61b dans une direction tendant à s'opposer à l'effort de serrage exercé par la rondelle ressort 65. Le piston de défreinage primaire 61a va ainsi de déplacer jusqu'à venir en butée contre une section de butée du piston de défreinage secondaire 61b si les deux pistons ne sont pas déjà au contact. Dans l'exemple illustré, le conduit de mise en pression 63 débouche dans la chambre de défreinage primaire 62a. On comprend que le conduit de mise en pression 63 peut de manière indifférente déboucher dans la chambre de défreinage primaire 62a ou dans la chambre de défreinage secondaire 62b, ces deux chambres de défreinage 62a et 62b étant reliées hydrauliquement.

Le piston de défreinage primaire 61a se déplace ainsi par translation selon la direction longitudinale dans la chambre intermédiaire 67 située entre le piston de défreinage primaire 61a d'une part, et le piston de défreinage secondaire 61b et le séparateur de chambre 64 d'autre part. Cette chambre intermédiaire 67 est typiquement reliée fluidiquement au volume interne du carter 3 (typiquement par un perçage ou une rainure aménagé dans le séparateur de chambre 64, dans un plan non visible sur les figures), et est donc à la pression de carter, c'est-à-dire typiquement à pression sensiblement nulle. Le carter est typiquement relié à un drain, permettant ainsi d'éviter une montée en pression au sein du carter. L'étanchéité entre le séparateur de chambre 64 et le carter 3 est par exemple réalisée par un joint plat, de type métallo-plastique, qui permet un passage de fluide au niveau du perçage 66. Un joint torique autour de l'interface avec le perçage 66 peut également être utilisé. Cette étanchéité permet d'éviter que l'huile de la chambre de défreinage principale 62 a ne communique avec la chambre intermédiaire 67 et le carter.

Le piston de défreinage secondaire 61b est quant à lui déjà en appui contre la rondelle ressort 65, dont l'effort de serrage s'oppose donc à la résultante de la pression au sein de la chambre de défreinage secondaire 62b. On comprend donc que dans le cas où le piston de défreinage primaire 61a n'est pas au contact du piston de défreinage secondaire 61b, le piston de défreinage primaire 61a se déplace plus rapidement que le piston de défreinage secondaire 61b sous l'effet de la pression introduite via le conduit de mise en pression 63, dans la mesure où seule la pression interne du carter s'oppose à son déplacement tandis que la rondelle ressort 65 s'oppose au déplacement du piston de défreinage secondaire 61b. Le piston de défreinage secondaire 61b peut être réalisé en une pièce, ou être formé de plusieurs pièces liées ensemble notamment par des moyens d'assemblage tels que des vis ou par des points de contact.

Une fois les pistons de défreinage 61a et 61b au contact, les efforts résultant des pressions au sein des chambres de défreinage primaire et secondaire 62a et 62b vont s'additionner, augmentant de ce fait l'effort de défreinage généré. On note que les pistons de défreinage 61a et 61b peuvent être en contact dès l'origine, ou le piston de défreinage primaire 61a peut n'avoir qu'une course très faible avant de venir au contact du piston de défreinage secondaire 61b. Le fonctionnement demeure alors similaire.

On comprend dont à la lecture de ce qui précède et au vu des figures que les deux pistons de défreinage 61a et 61b ainsi proposés permettent d'obtenir un effort de défreinage supérieur à un piston de défreinage unique ayant un encombrement radial identique. La pression requise pour s'opposer à l'effort de serrage appliqué par la rondelle ressort 65 et ainsi desserrer les disques de freinage est donc réduite, et est typiquement comprise entre 12 et 30 bar. Cette solution permet de défreiner avec une pression plus faible à encombrement constant ou de diminuer l'encombrement en conservant la même pression de défreinage.

En variante, les pistons de défreinage 61a et 61b peuvent être solidarisés après avoir été positionnés dans la machine hydraulique 1, typiquement par des éléments d'assemblage tels que des boulons. Le fonctionnement est alors similaire à celui décrit précédemment les pistons de défreinage primaire 61a et secondaire 61b étant alors maintenus au contact l'un de l'autre et solidaires en translation.

La machine hydraulique telle que représentée comprend également une commande de freinage 70, que l'on qualifie de freinage dynamique.

Cette commande de freinage comprend un piston de freinage 71 adapté pour sélectivement appliquer un effort de serrage sur les disques de freinage 92 et 93. Ce piston de freinage 71 est piloté par une chambre de freinage 72 alimentée par un conduit de mise en pression 73. Comme on le comprend au vu des figures, une montée en pression au sein de la chambre de freinage 72 entraine un déplacement du piston de freinage 71 selon une direction de freinage, tendant à exercer une action de serrage sur les disques de freinage 92 et 93. Dans l'exemple représenté, le piston de freinage 71 est interposé entre le piston de défreinage 61 (plus précisément le piston de défreinage secondaire 61b) et l'empilement de disques de freinage, et la chambre de freinage 72 ainsi que le conduit de mise en pression 73 sont formés dans le piston de défreinage 61, plus précisément dans le piston de défreinage secondaire 61b. Ce piston de freinage 71 peut être réalisé sous la forme d'un piston annulaire tel que représenté sur les figures ou bien sous la forme d'une pluralité de pistons de freinage essentiellement cylindriques. Des joints d'étanchéités sont présent autour du piston de freinage 71, afin d'éviter toute communication entre la chambre de freinage 72 et la chambre de défreinage secondaire 62b, ainsi qu'entre la chambre de freinage 72 et le carter et/ou la chambre intermédiaire 67.

A titre de variante, la machine hydraulique peut ne comporter qu'un frein statique sans frein dynamique.

Dans le mode de réalisation représenté sur les figures, les éléments de freinage 92 et 93 sont disposés entre le distributeur 5 et l'extrémité distale 22 de l'arbre 2. On comprend bien qu'un tel mode de réalisation n'est pas limitatif, et que le système de freinage comprenant les éléments de freinage 92 et 93 peut être positionné ailleurs, par exemple dans le prolongement du distributeur 5 et de l'extrémité proximale 21 de l'arbre 2, et collaborer avec un arbre de frein lié au bloc-cylindres, notamment par des cannelures.

La machine hydraulique 1 telle que représentée sur les figures 1 et 2 forme typiquement une fusée de roue pour un véhicule. On comprend bien que la machine hydraulique telle que présentée n'est pas limitée à une telle application.

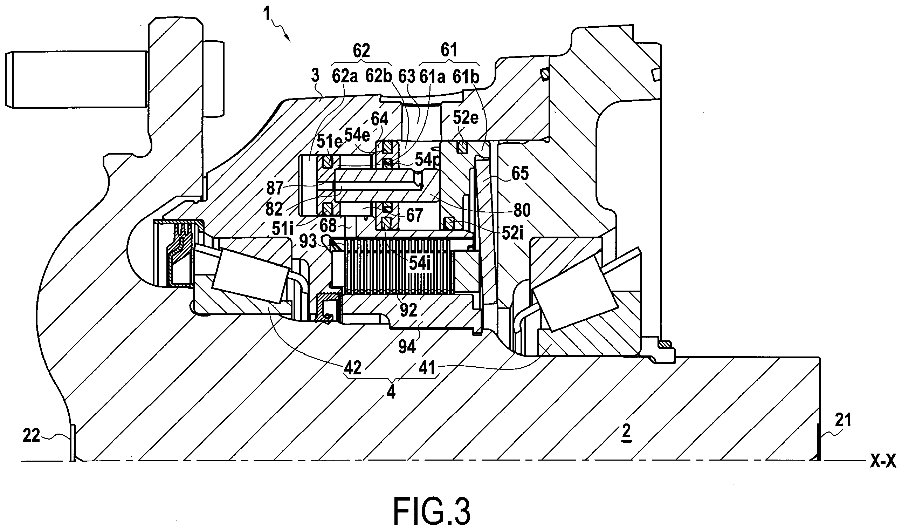

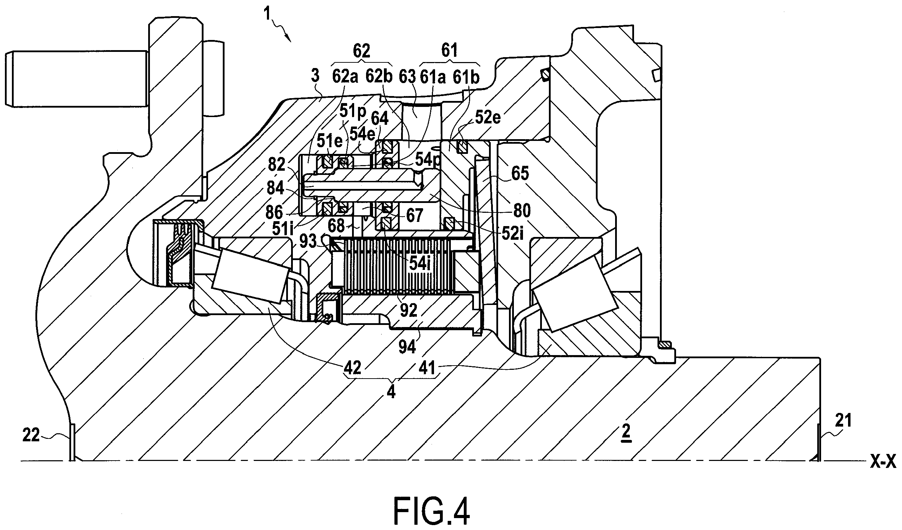

Les figures 3 et 4 présentent deux vues partielles d'autres variantes d'un autre mode de réalisation de la machine hydraulique telle que décrite précédemment en référence aux figures 1 et 2. Les différents éléments sont repérés par des références numériques identiques.

Comme déjà détaillé en référence aux modes de réalisation précédents, le piston de défreinage 61 est formé de deux pistons ; un piston de défreinage primaire 61a et un piston de défreinage secondaire 61b. La chambre de défreinage 62 comprend deux chambres : une chambre de défreinage primaire 62a et une chambre de défreinage secondaire 62b pilotant respectivement le déplacement du piston de défreinage primaire 61a et du piston de défreinage secondaire 61b.

Un séparateur de chambre 64 est interposé entre le piston de défreinage primaire 61a et le piston de défreinage secondaire 61b. Ce séparateur de chambre 64 permet de plus de définir la chambre de défreinage secondaire 62b de manière à ce que la pression en son sein ne s'applique pas sur le piston de défreinage primaire 61a.

Comme pour le mode de réalisation déjà décrit en référence aux figures 1 et 2, la zone entre le séparateur de chambre 64 et le piston de défreinage primaire 61a définit une chambre intermédiaire 67, cette chambre intermédiaire 67 définissant le déplacement maximal possible pour le piston de défreinage primaire 61a. La chambre intermédiaire 67 est reliée à un volume interne du carter 3 de la machine hydraulique via un perçage 68, assurant un maintien de la chambre intermédiaire 67 sensiblement à pression ambiante.

Comme on le voit sur la figure 3, le piston de défreinage primaire 61a est muni d'un joint d'étanchéité externe 51e sur sa périphérie externe et d'un joint d'étanchéité interne 51i sur sa périphérie interne, ces joints d'étanchéité 51e et 51i assurant ainsi un contact étanche avec les parois du carter 3 définissant la chambre de défreinage primaire 62a. De même, le piston de défreinage secondaire 61b est muni d'un joint d'étanchéité externe 52e sur sa périphérie externe et d'un joint d'étanchéité interne 52i sur sa périphérie interne, ces joints d'étanchéité 52e et 52i assurant ainsi un contact étanche avec les parois du carter 3 définissant la chambre de défreinage secondaire 62b. Le séparateur de chambre 64 est quant à lui également muni d'un joint d'étanchéité externe 54e et d'un joint d'étanchéité interne 54i assurant ainsi un contact étanche avec les parois du carter 3 définissant la chambre intermédiaire 67. Le séparateur de chambre 64 est également muni d'un joint d'étanchéité 54p positionné au niveau du contour interne d'un perçage réalisé dans le séparateur de chambre 64 et via lequel un pion 80 traverse le séparateur de chambre 64, de manière à réaliser une liaison étanche entre le séparateur de chambre 64 et le pion 80.

Le mode de réalisation représenté sur la figure 4 présente également de tels joints d'étanchéité, mais également un joint d'étanchéité 51p positionné dans un perçage du piston de défreinage primaire 61a via lequel est inséré le pion 80, de manière à réaliser une liaison étanche entre le piston de défreinage primaire 61a et le pion 80.

Dans les exemples décrits précédemment, on comprend que les différents d'étanchéité peuvent prendre différentes formes, par exemple un joint d'étanchéité de section circulaire ou ovale, associé ou non à un patin de frottement, ou plus généralement tout élément d'étanchéité adapté.

Dans ces modes de réalisation, le piston de défreinage primaire 61a (c'est-à-dire le piston de défreinage non au contact direct de la rondelle ressort 65) est couplé à un ou plusieurs pions 80 configurés pour venir en appui contre le piston de défreinage secondaire 61b.

De tels pions 80 sont alors solidaires, ou au contact, du piston de défreinage primaire 61a et comprennent un conduit interne 82 de manière à relier la chambre de défreinage primaire 62a à la chambre de défreinage secondaire 62b. Dans les modes de réalisation représentés sur les figures 3 et 4, le conduit de mise en pression 63 débouche dans la chambre de défreinage secondaire 62b. Le conduit 82 aménagé dans le pion 80 vise ainsi à relier la chambre de défreinage secondaire 62b à la chambre de défreinage primaire 62a.

Dans les modes de réalisation représentés sur les figures 3 et 4, le pion 80 traverse le séparateur de chambre 64. Une liaison coulissante étanche est ainsi réalisée entre chacun des pions 80 et le séparateur de chambre 64.

Dans le mode de réalisation représenté sur la figure 3, le pion 80 s'étend depuis le piston de défreinage primaire 61a jusqu'au piston de défreinage secondaire 61b, mais le pion 80 ne traverse pas le piston de défreinage primaire 61a. Le pion 80 est ainsi solidarisé de manière étanche au piston de défreinage primaire 61a via une de ses extrémités de laquelle débouche le conduit interne 82. Le piston de défreinage primaire 61a présente alors un perçage traversant 87 réalisé dans le prolongement du conduit interne 82 du pion 80, de manière à relier le conduit interne avec la chambre de défreinage primaire 62a.

Dans le mode de réalisation représenté sur la figure 4, le pion 80 traverse le piston de défreinage primaire 61a, et le conduit interne 82 du pion 80 débouche ainsi directement dans la chambre de défreinage primaire 62a. Le pion 80 est alors muni d'une rainure dans laquelle est logé un circlip 84, ce dernier coopérant avec un épaulement 86 du pion venant en appui contre le piston de défreinage primaire 61a afin d'assurer un verrouillage en translation du pion 80 par rapport au piston de défreinage primaire 61a.

Le conduit interne 82 du pion 80 tel que représenté sur les figures 3 et 4 remplit une fonction similaire à celle du perçage 66 décrit précédemment en référence aux figures 1 et 2. Le fonctionnement est ainsi similaire au fonctionnement déjà décrit précédemment.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Machine hydraulique (1) comprenant un arbre (2) et un carter (3) montés tournant l'un par rapport à l'autre au moyen d'un palier (4), la machine hydraulique (1) comprenant
- des premiers éléments de freinage (93), solidaires en rotation du carter (3),
- des seconds éléments de freinage (92), solidaires en rotation de l'arbre (2),
les premiers et seconds éléments de freinage (92, 93) formant un empilement et étant configurés de manière à réaliser une solidarisation en rotation du carter (3) par rapport à l'arbre (2) lors de leur mise en contact,
- une rondelle ressort (65) montée en appui sur le carter (3), et tendant à solliciter les premiers et seconds éléments de freinage (92, 93) selon un sens de freinage tendant à provoquer une mise au contact des premiers et seconds éléments de freinage (92, 93),
- un piston de défreinage (61), configuré pour solliciter la rondelle ressort (65) selon un sens antagoniste au sens de freinage,
**caractérisée en ce que**
le piston de défreinage (61) comprend un piston de défreinage primaire (61a) associé à une chambre de défreinage primaire (62a) et un piston de défreinage secondaire (61b) associé à une chambre de défreinage secondaire (62b), lesdites chambres primaire (62a) et secondaire (62b) étant reliées hydrauliquement et adaptées pour exercer un effort de poussée sur le piston primaire (61a) et sur le piston secondaire (61b) respectivement,
lesdites chambres primaire (62a) et secondaire (62b) étant disposées successivement selon une direction longitudinale de l'arbre (2) et s'étendant radialement autour de l'arbre (2), de sorte que les projections de la chambre de défreinage primaire (62a) et de la chambre de défreinage secondaire (62b) selon un plan perpendiculaire à un axe longitudinal (X-X) défini par l'axe de rotation de la machine hydraulique (1) se superposent au moins partiellement.

2. Machine hydraulique (1) selon la revendication 1, comprenant en outre un séparateur de chambre (64), configuré pour séparer les pistons de défreinage primaire (61a) et secondaire (61b) de sorte que la pression au sein de chacune des chambres primaire (62a) et secondaire (62b) ne s'exerce que sur une unique face d'un unique piston de défreinage (61a, 61b).

3. Machine hydraulique (1) selon la revendication 2, dans laquelle le séparateur de chambre (64) comprend au moins un perçage (66) pour permettre la communication de la pression de défreinage entre les chambres de défreinage primaire (62a) et secondaire (62b).

4. Machine hydraulique (1) selon l'une des revendications 2 ou 3, dans laquelle
la chambre de défreinage primaire (62a) est délimitée par le carter et par le piston de défreinage primaire (61a),
la chambre de défreinage secondaire (62b) est délimitée par le séparateur de chambre (64) et par le piston de défreinage secondaire (61b).

5. Machine hydraulique (1) selon l'une des revendications 1 à 4, dans laquelle en projection selon un plan perpendiculaire à un axe longitudinal (X-X) défini par l'axe de rotation de la machine hydraulique (1), les projections de la chambre de défreinage primaire (62a) et de la chambre de défreinage secondaire (62b) se superposent au moins partiellement, de sorte que la projection de la chambre de défreinage secondaire (62b) recouvre au moins 30 % de la projection de la chambre de défreinage primaire (62a).

6. Machine hydraulique (1) selon l'une des revendications 1 à 5, comprenant en outre un piston de freinage (71) interposé entre l'empilement et le piston de défreinage (61), et étant associé à une chambre de freinage (72) configurée pour appliquer un effort sur le piston (71) de freinage tendant à le solliciter selon un sens de freinage tendant à provoquer une mise au contact des premiers et seconds éléments de freinage (92, 93).

7. Machine hydraulique (1) selon l'une des revendications 1 à 6, dans laquelle la chambre de défreinage (62) est reliée à une source d'alimentation en pression (63) configurée pour délivrer une pression inférieure ou égale à 30 bars.

8. Machine hydraulique (1) selon l'une des revendications 1 à 7, dans laquelle le piston de défreinage primaire (61a) se déplace en translation dans une chambre intermédiaire (67) reliée fluidiquement à un volume interne du carter (3).

9. Machine hydraulique (1) selon l'une des revendications 1 à 8, comprenant un bloc cylindres (6) définissant une pluralité de cylindres s'étendant radialement autour de l'axe longitudinal de l'arbre (2) et dans lesquels sont disposés des pistons (7) disposés en regard d'une came multilobes (8).

## Patentansprüche

1. Hydraulische Maschine (1), umfassend eine Welle (2) und ein Gehäuse (3), die mittels eines Lagers (4) zueinander drehbar angebracht sind, wobei die hydraulische Maschine (1) umfasst
- erste Bremselemente (93), die mit dem Gehäuse (3) drehfest verbunden sind,
- zweite Bremselemente (92), die mit der Welle (2) drehfest verbunden sind, wobei das erste und das zweite Bremselement (92, 93) einen Stapel bilden und so ausgelegt sind, dass eine drehfeste Verbindung des Gehäuses (3) gegenüber der Welle (2) hergestellt wird, wenn sie in Kontakt gebracht werden,
- einen Federring (65), der an dem Gehäuse (3) in Anlage angebracht ist und darauf abzielt, das erste und das zweite Bremselement (92, 93) in einer Bremsrichtung zu beaufschlagen, mit dem Ziel, ein Inkontaktbringen des ersten und des zweiten Bremselements (92, 93) zu bewirken,
- einen Bremslösekolben (61), der dazu ausgelegt ist, den Federring (65) in eine der Bremsrichtung entgegenwirkende Richtung zu beaufschlagen,
**dadurch gekennzeichnet, dass**
der Bremslösekolben (61) einen primären Bremslösekolben (61a), der einer primären Bremslösekammer (62a) zugeordnet ist, sowie einen sekundären Bremslösekolben (61b), der einer sekundären Bremslösekammer (62b) zugeordnet ist, umfasst, wobei die primäre Kammer (62a) und die sekundäre Kammer (62b) hydraulisch verbunden sind und dazu ausgelegt sind, eine Schubkraft auf den primären Kolben (61a) bzw. auf den sekundären Kolben (61b) auszuüben,
wobei die primäre Kammer (62a) und die sekundäre Kammer (62b) in einer Längsrichtung der Welle (2) nacheinander angeordnet sind und sich radial um die Welle (2) herum erstrecken, so dass die Projektionen der primären Bremslösekammer (62a) und der sekundären Bremslösekammer (62b) entlang einer Ebene senkrecht zu einer Längsachse (X-X), welche durch die Drehachse der hydraulischen Maschine (1) definiert ist, sich wenigstens teilweise überlagern.

2. Hydraulische Maschine (1) nach Anspruch 1, ferner umfassend einen Kammertrenner (64), der dazu ausgelegt ist, den primären (61a) und den sekundären (61b) Bremslösekolben zu trennen, so dass der Druck innerhalb einer jeden der primären (62a) und der sekundären (62b) Kammer nur auf eine einzige Seite eines einzigen Bremslösekolbens (61a, 61b) ausgeübt wird.

3. Hydraulische Maschine (1) nach Anspruch 2, bei der der Kammertrenner (64) wenigstens eine Bohrung (66) aufweist, um die Verbindung des Bremslösedrucks zwischen der primären (62a) und der sekundären (62b) Bremslösekammer zu ermöglichen.

4. Hydraulische Maschine (1) nach einem der Ansprüche 2 oder 3, bei der
die primäre Bremslösekammer (62a) durch das Gehäuse und durch den primären Bremslösekolben (61a) begrenzt ist,
die sekundäre Bremslösekammer (62b) durch den Kammertrenner (64) und durch den sekundären Bremslösekolben (61b) begrenzt ist.

5. Hydraulische Maschine (1) nach einem der Ansprüche 1 bis 4, bei der sich die Projektionen der primären Bremslösekammer (62a) und der sekundären Bremslösekammer (62b) in Projektion entlang einer Ebene senkrecht zu einer Längsachse (X-X), welche durch die Drehachse der hydraulischen Maschine (1) definiert ist, wenigstens teilweise überlagern, so dass die Projektion der sekundären Bremslösekammer (62b) wenigstens 30 % der Projektion der primären Bremslösekammer (62a) bedeckt.

6. Hydraulische Maschine (1) nach einem der Ansprüche 1 bis 5, ferner umfassend einen Bremskolben (71), der zwischen dem Stapel und dem Bremslösekolben (61) angeordnet ist und einer Bremskammer (72) zugeordnet ist, welche dazu ausgelegt ist, eine Kraft an den Bremskolben (71) anzulegen, welche darauf abzielt, ihn in eine Bremsrichtung zu beaufschlagen, mit dem Ziel, ein Inkontaktbringen des ersten und des zweiten Bremselements (92, 93) zu bewirken.

7. Hydraulische Maschine (1) nach einem der Ansprüche 1 bis 6, bei der die Bremslösekammer (62) mit einer Druckversorgungsquelle (63) verbunden ist, die dazu ausgelegt ist, einen Druck von weniger als oder gleich 30 bar zu liefern.

8. Hydraulische Maschine (1) nach einem der Ansprüche 1 bis 7, bei der sich der primäre Bremslösekolben (61a) in einer Zwischenkammer (67), welche mit einem Innenvolumen des Gehäuses (3) strömungstechnisch verbunden ist, verschieblich bewegt.

9. Hydraulische Maschine (1) nach einem der Ansprüche 1 bis 8, umfassend einen Zylinderblock (6), der eine Vielzahl von Zylindern definiert, die sich radial um die Längsachse der Welle (2) herum erstrecken und in denen Kolben (7) angeordnet sind, welche gegenüber einem mehrlappigen Nocken (8) angeordnet sind.

## Claims

1. A hydraulic machine (1) comprising a shaft (2) and a casing (3) mounted to rotate relative to each other by means of a bearing (4), the hydraulic machine (1) comprising:
- first brake elements (93) constrained to rotate with the casing (3);
- second brake elements (92) constrained to rotate with the shaft (2);
the first and second brake elements (92, 93) forming a stack and being configured so as to enable the casing (3) to be constrained to rotate with the shaft (2) when they are put into contact;
- a spring washer (65) mounted to bear against the casing (3) and tending to urge the first and second brake elements (92, 93) in a braking direction, tending to cause the first and second brake elements (92, 93) to be put into contact; and
- a brake release piston (61) configured to act on the spring washer (65) in a direction opposing the braking direction;
the hydraulic machine being **characterized in that**:
- the brake release piston (61) comprises a primary brake release piston (61a) associated with a primary brake release chamber (62a), and a secondary brake release piston (61b) associated with a secondary brake release chamber (62b), said primary and secondary chambers (62a, 62b) being fluidly connected together and adapted to exert thrust force respectively on the primary piston (61a) and on the secondary piston (61b); and
- said primary and secondary chambers (62a, 62b) being arranged in succession along a longitudinal direction of the shaft (2) and extending radially around the shaft (2) in such a manner that projections of the primary brake release chamber (62a) and of the secondary brake release chamber (62b) onto a plane perpendicular to a longitudinal axis (X-X) defined by the axis of rotation of the hydraulic machine (1) are superposed, at least in part.

2. A hydraulic machine (1) according to claim 1, further comprising a chamber separator (64) configured to separate the primary and secondary brake release pistons (61a, 61b) in such a manner that the pressure within each of the primary and secondary chambers (62a, 62b) act on only one face of a single brake release piston (61a, 61b) .

3. A hydraulic machine (1) according to claim 2, wherein the chamber separator (64) includes at least one hole (66) to enable the brake release pressure to be communicated between the primary and secondary brake release chambers (62a, 62b).

4. A hydraulic machine (1) according to claim 2 or claim 3, wherein:
the primary brake release chamber (62a) is defined by the casing and by the primary brake release piston (61a); and
the secondary brake release chamber (62b) is defined by the chamber separator (64) and by the secondary brake release piston (61b).

5. A hydraulic machine (1) according to any one of claims 1 to 4, wherein, in projection onto a plane perpendicular to a longitudinal axis (X-X) defined by the axis of rotation of the hydraulic machine (1), the projections of the primary brake release chamber (62a) and of the secondary brake release chamber (62b) are superposed, at least in part, in such a manner that the projection of the secondary brake release chamber (62b) covers at least 30% of the projection of the primary brake release chamber (62a).

6. A hydraulic machine (1) according to any one of claims 1 to 5, further comprising a braking piston (71) interposed between the stack and the brake release piston (61), and associated with a braking chamber (72) configured to apply a force on the braking piston (71) tending to urge it in a braking direction tending to cause the first and second brake elements (92, 93) to be put into contact.

7. A hydraulic machine (1) according to any one of claims 1 to 6, wherein the brake release chamber (62) is connected to a pressure feed source (63) configured to deliver a pressure less than or equal to 30 bar.

8. A hydraulic machine (1) according to any one of claims 1 to 7, wherein the primary brake release piston (61a) moves in translation in an intermediate chamber (67) in fluid flow connection with an internal volume of the casing (3).

9. A hydraulic machine (1) according to any one of claims 1 to 8, including a cylinder block (6) defining a plurality of cylinders extending radially around the longitudinal axis of the shaft (2) and having pistons (7) arranged therein facing a multi-lobe cam (8).
